Europäisches Patentamt

European Patent Office

Office européen des brevets

(19)

(11)    **EP 1 121 553 B1**

(12)                    **FASCICULE DE BREVET EUROPEEN**

(45) Date de publication et mention
de la délivrance du brevet:
**15.05.2002 Bulletin 2002/20**

(21) Numéro de dépôt: **99947523.9**

(22) Date de dépôt: **11.10.1999**

(51) Int Cl.⁷: **F16L 15/06**

(86) Numéro de dépôt international:
**PCT/FR99/02427**

(87) Numéro de publication internationale:
**WO 00/22339 (20.04.2000 Gazette 2000/16)**

(54) **ASSEMBLAGE FILETE INTEGRAL DE DEUX TUBES METALLIQUES**

GEWINDEVERBINDUNG FÜR ZWEI METALLROHRE

INTEGRAL THREADED ASSEMBLY OF TWO METAL TUBES

(84) Etats contractants désignés:
**AT BE CH CY DE DK ES FI FR GB GR IE IT LI LU
MC NL PT SE**

(30) Priorité: **13.10.1998 FR 9812961**

(43) Date de publication de la demande:
**08.08.2001 Bulletin 2001/32**

(73) Titulaire: **VALLOUREC MANNESMANN OIL &
GAS FRANCE
59620 Aulnoye-Aymeries (FR)**

(72) Inventeurs:
• **NOEL, Thierry
F-59990 Sebourg (FR)**
• **VARENNE, Emmanuel
F-69400 Villefranche s/Saone (FR)**

(74) Mandataire: **Desolneux, Jean-Paul Charles et al
Setval
Division Propriété Industrielle
130, rue de Silly
92100 Boulogne-Billancourt (FR)**

(56) Documents cités:
**EP-A- 0 648 967          DE-A- 4 035 684
FR-A- 1 436 319**

**Description**

L'invention concerne les assemblages filetés de deux tubes métalliques du type intégral.

On entend par assemblages filetés intégraux ceux dans lesquels un élément mâle disposé en extrémité d'un premier tube est assemblé à un élément femelle disposé en extrémité d'un second tube sans pièce intermédiaire du genre manchon.

On connaît de tels assemblages filetés intégraux, notamment utilisés pour constituer des colonnes de tubes de production ou de cuvelage ou des trains de tiges de forage dans les puits d'hydrocarbures ou dans les puits similaires tels que, par exemple, les puits pour la géothermie.

Le brevet US 4,521,042 décrit un assemblage fileté intégral comportant

- des filetages mâles et femelles cylindriques à deux étages distants radialement ;
- trois paires de surfaces annulaires transversales, une paire médiane entre les deux étages de filetage , une paire extérieure vers l'extrémité libre femelle et une paire intérieure vers l'extrémité libre mâle ;
- et trois paires de portées d'étanchéité coniques, une vers l'extrémité libre mâle, une vers l'extrémité libre femelle et une constituée par la paire médiane de surfaces transversales.

Chaque paire de surfaces transversales ou de portées d'étanchéité est constituée par deux surfaces conjuguées, une sur l'élément mâle, l'autre sur l'élément femelle.

Les surfaces transversales de la paire médiane de surfaces transversales sont en butée sur l'assemblage et ont pour rôle d'absorber le couple de vissage, de mettre sous tension les filetages, d'assurer une étanchéité centrale et de définir une position de fin d'assemblage pour les portées d'étanchéité.

Les paires intérieure et extérieure de surfaces transversales sont en renfort de la paire médiane en cas de survissage ou de surcharge en service.

Dans la suite du présent document, on désigne par surfaces d'appui de telles surfaces transversales en butée ou susceptibles de venir en butée.

Ces surfaces d'appui sont d'orientation sensiblement transversale par rapport à l'axe de l'assemblage et peuvent être des extrémités de tubes ou provenir d'épaulements sur la surface intérieure de l'élément femelle ou sur la surface extérieure de l'élément mâle.

Les termes "transversal " et " longitudinal " se rapportent dans la suite du présent document à la direction de l'axe de l'assemblage.

La paire médiane de surfaces d'appui est ainsi constituée de surfaces coniques très ouvertes, convexes sur un élément et concaves sur l'autre, de manière à générer des contraintes radiales lors de leur mise en butée.

Les portées d'étanchéité sont organisées en paires de surfaces mâle et femelle interférant radialement l'une sur l'autre avec une pression de contact métal sur métal élevée. Ces paires sont destinées à assurer l'étanchéité de la colonne à l'égard du fluide intérieur et/ou à l'égard du milieu extérieur, même lorsque les pressions de fluide sont élevées.

On définit de manière générale l'interférence diamétrale entre des points conjugués de référence de deux surfaces de révolution d'un assemblage comme la différence de diamètre entre ces points, mesurée lorsque les éléments ne sont pas assemblés.

L'interférence diamétrale est comptée positivement lorsque les surfaces une fois assemblées interfèrent radialement l'une sur l'autre et développent une pression de contact, la pression de contact étant sensiblement proportionnelle à l'interférence diamétrale.

Un assemblage tel que celui décrit dans le brevet US 4,521,042 est coûteux à réaliser pour différentes raisons: La réalisation des éléments mâle et femelle, généralement par usinage, est forcément longue compte tenu de la géométrie complexe à réaliser et de la précision nécessaire pour un fonctionnement correct de l'assemblage.

La réalisation d'épaulements en surplomb avec des surfaces d'appui concaves et des angles aigus au pied des épaulements est par exemple délicate et peut nécessiter la mise en oeuvre de passes d'usinage spécifiques et/ou d'outils particuliers.

Il n'est en outre pas évident de synchroniser l'action de multiples portées et butées pour obtenir un fonctionnement correct et reproductible de l'assemblage.

Un fonctionnement incorrect de l'assemblage peut être dû à des cotes dimensionnelles mal choisies compte tenu notamment des déformations élastiques des éléments mâle et femelle lors de leur assemblage.

Un fonctionnement non reproductible de l'assemblage peut être dû à des cotes dimensionnelles mal choisies compte tenu notamment des tolérances de fabrication.

Enfin, la réalisation des éléments mâle et femelle nécessite généralement, pour loger les deux étages de filetage et les différentes surfaces d'appui, des tubes dont les extrémités ont été rengraissées par exemple par forgeage par rapport au corps des tubes, ce qui représente une opération relativement coûteuse.

Un autre assemblage fileté du type intégral, nommé " VAM® ACE XS ", est décrit dans le document VAM Catalog n° 940 édité en juillet 1994 par Vallourec Oil & Gas pages 28 à 31.

L'assemblage de deux tubes décrit dans ce document présente sur l'élément mâle, en allant vers l'extrémité du premier tube, un épaulement extérieur avec une surface d'appui annulaire plane normale à l'axe de l'assemblage, un filetage conique mâle à filets trapézoïdaux de conicité 1/16 (6,25%) sur le diamètre, une lèvre cylindrique de raccordement au-delà du filetage et une portée d'étanchéité mâle conique dont la conicité est de 10 % sur le diamètre. La surface d'extrémité de l'élément mâle qui est aussi la surface d'extrémité du tube est une surface légèrement conique concave, les points de cette surface au voisinage de la portée étant en léger surplomb par rapport à ceux situés au voisinage de la surface intérieure du tube.

L'assemblage présente sur l'élément femelle en allant vers extrémité du second tube, un épaulement intérieur avec une surface d'appui annulaire faiblement conique convexe dont la conicité correspond à celle de la surface d'extrémité de l'élément mâle, une portée d'étanchéité femelle conique de conicité correspondant à celle de l'élément mâle et un filetage conique femelle à filets trapézoïdaux complémentaire du filetage de l'élément mâle. Au-delà du filetage, l'élément femelle se termine par une surface d'extrémité perpendiculaire à l'axe de l'assemblage.

Lorsque l'assemblage de ces deux tubes est réalisé, le filetage extérieur de l'élément mâle est vissé dans le filetage intérieur de l'élément femelle, la surface d'extrémité de l'élément mâle forme avec la surface d'appui de l'élément femelle une paire intérieure de surfaces d'appui en butée, la surface d'extrémité de l'élément femelle forme avec la surface d'appui de l'élément mâle une paire extérieure de surfaces d'appui en butée ou sensiblement en butée et la portée d'étanchéité mâle interfère radialement avec la portée d'étanchéité femelle.

Un tel assemblage permet, grâce à ses deux paires de surfaces d'appui, de faire passer un couple de vissage très important et d'obtenir de bonnes caractéristiques de résistance à la compression et à la flexion. Néanmoins ce type d'assemblage reste assez onéreux à produire si l'on souhaite qu'il fonctionne correctement et de manière reproductible.

Le brevet FR 2 364 322 décrit encore un autre assemblage fileté intégral dont la disposition générale est assez voisine de celle de l'assemblage " VAM® ACE XS " avec sur chaque élément un épaulement avec une surface d'appui annulaire, un filetage conique, une portée d'étanchéité et une surface annulaire d'extrémité, la portée d'étanchéité mâle étant située entre le filetage et la surface annulaire d'extrémité mâles tandis que la portée d'étanchéité femelle est située entre la surface d'appui annulaire et le filetage femelles.

L'assemblage décrit dans le brevet FR 2 364 322 diffère du "VAM® ACE XS " par la présence sur chaque élément d'une seconde portée d'étanchéité à l'autre extrémité de l'élément et par le fait que la paire de surfaces d'appui coniques est au choix la paire intérieure ou la paire extérieure selon les conditions prévues de service.

Selon le document FR 2 364 322, la portée d'étanchéité du côté extrémité est bombée et celle du côté épaulement est conique, la portée d'étanchéité bombée d'un élément coopérant avec la portée d'étanchéité conique de l'autre élément pour former une paire de portées d'étanchéité.

Les surfaces de la paire de surfaces d'appui coniques sont mises en butée en premier lieu au cours du vissage pour bénéficier de la relative souplesse de ce type de butée et amplifier la pression de contact de la paire de portées d'étanchéité la plus proche de la paire de surfaces d'appui coniques.

La paire de surfaces d'appui planes sert de renfort et constitue une butée de sécurité très rigide, d'autant plus que leur superficie est supérieure à celle de la paire de surfaces d'appui coniques.

Pour que la paire de surfaces d'appui coniques soit mise en butée en premier lieu lors du vissage, le brevet prévoit que la distance entre surface d'extrémité et surface d'appui de l'élément dont la surface d'extrémité est conique est plus grande de 0,05 à 0,25% que la distance correspondante sur l'autre élément.

Un tel assemblage est également coûteux à produire.

Le document DE-A-4035684 décrit également un assemblage fileté intégral, susceptible de comporter selon certains modes de réalisation les moyens structurels figurant dans le préambule de la revendication 1.

On a cherché par la présente invention à réaliser un assemblage fileté intégral à filetages coniques, à deux paires de surfaces d'appui et au moins une paire de portées d'étanchéité dont la géométrie soit optimisée mais qui soit économique à réaliser.

On a notamment cherché à faire passer un maximum de pression de contact au niveau des portées d'étanchéité.

On a aussi cherché à obtenir une bonne synchronisation de fonctionnement des deux paires de surfaces d'appui en privilégiant la mise en butée lors de l'assemblage d'une paire de surfaces d'appui, toujours la même.

On a aussi cherché à utiliser des portées d'étanchéité moins susceptibles au grippage.

L'ensemble de ces propriétés est basiquement obtenu par la combinaison des caractéristiques de la revendication 1 de la présente invention.

L'assemblage fileté intégral de deux tubes métalliques selon l'invention comprend un élément mâle en extrémité d'un premier tube et un élément femelle en extrémité d'un second tube.

L'élément mâle comprend en allant vers l'extrémité libre du premier tube

- un épaulement extérieur avec une surface d'appui annulaire dite " extérieure mâle",
- un filetage extérieur conique dit " filetage mâle",
- une portée d'étanchéité extérieure dite " portée d'étanchéité mâle ",
- et une surface d'extrémité mâle annulaire qui est aussi la surface d'extrémité du premier tube.

L'élément femelle comprend en allant vers l'extrémité libre du second tube :

- un épaulement intérieur avec une surface d'appui annulaire dite "intérieure femelle ",
- une portée d'étanchéité intérieure dite " portée d'étanchéité femelle ", adaptée à la portée d'étanchéité mâle,
- un filetage intérieur conique, dit " filetage femelle", conjugué du filetage mâle,
- et une surface d'extrémité femelle annulaire qui est aussi la surface d'extrémité du second tube.

Le filetage mâle est vissé dans le filetage femelle.

La portée d'étanchéité mâle interfère radialement avec la portée d'étanchéité femelle.

La surface d'extrémité mâle forme avec la surface d'appui intérieure femelle une paire intérieure de surfaces d'appui et la surface d'extrémité femelle forme avec la surface d'appui extérieure mâle une paire extérieure de surfaces d'appui.

Les surfaces d'extrémité et d'appui de chaque élément mâle et femelle sont des surfaces planes disposées perpendiculairement à l'axe de l'assemblage.

La portée d'étanchéité mâle est séparée du filetage mâle par une lèvre qui présente extérieurement une surface de lèvre conique dont la conicité est égale à celle du filetage mâle et dont la génératrice est sensiblement dans le prolongement de la tangente aux fonds de filet du filetage mâle tout en restant du côté de l'axe de l'assemblage par rapport au prolongement de la tangente aux dits fonds de filet.

La surface de la portée d'étanchéité mâle est intérieure ou tangente à la surface prolongeant la surface conique de lèvre.

La distance entre la surface d'extrémité mâle et la surface d'appui extérieure mâle est adaptée à la distance entre la surface d'extrémité femelle et la surface d'appui intérieure femelle de manière à ce que, lors du vissage, la mise en butée se fasse en premier lieu entre la paire intérieure de surfaces d'appui.

Une telle configuration permet à la fois de protéger la portée d'étanchéité mâle des coups susceptibles de rendre l'assemblage fuyard, d'augmenter les caractéristiques de fonctionnement de l'assemblage, de rendre ce fonctionnement reproductible et sûr et de simplifier la fabrication des éléments.

Préférentiellement, la distance entre la génératrice de la surface conique de lèvre et la tangente aux fonds des filets mâles est inférieure ou égale à 0,20 mm.

Préférentiellement aussi, la conicité des filetages mâle et femelle rapportée au diamètre est comprise entre 6,25% et 20%.

Préférentiellement encore, la portée d'étanchéité mâle est une surface conique coaxiale à la surface conique de lèvre et de conicité supérieure à celle de cette dernière et la portée d'étanchéité femelle est aussi une surface conique de conicité sensiblement identique à celle de la portée mâle.

Très préférentiellement, la conicité de la portée d'étanchéité mâle rapportée au diamètre est comprise entre 25% et 75%.

Préférentiellement, les filetages mâle et femelle sont formés chacun d'une seule partie filetée.

En variante plus coûteuse, ils peuvent être formés chacun de deux parties filetées étagées, la surface conique de lèvre étant alors sensiblement dans le prolongement de la partie filetée du filetage mâle à laquelle elle est adjacente.

Préférentiellement, les surfaces de la paire extérieure de surfaces d'appui sont sur l'assemblage en butée l'une contre l'autre comme le sont les surfaces de la paire intérieure de surfaces d'appui : la première paire de surfaces d'appui à fonctionner en butée, à savoir la paire intérieure de surfaces d'appui, absorbe la majeure partie du couple effectif de vissage, la paire extérieure de surfaces d'appui en butée absorbant le reste du couple de vissage.

Alternativement, les surfaces de la paire extérieure de surfaces d'appui sont sur l'assemblage en quasi contact l'une contre l'autre. On entend par là que les surfaces de la paire extérieure de surfaces d'appui sont distantes de moins d'un dixième de mm.

Que les surfaces des deux paires de surfaces d'appui se trouvent en butée sur l'assemblage ou seulement celles de la paire intérieure de surfaces d'appui, la paire extérieure de surfaces d'appui en butée ou en quasi contact est là pour venir immédiatement en renfort de manière à absorber les sollicitations résiduelles au vissage ou celles supplémentaires en service sans risquer de plastifier le métal des éléments.

Avantageusement pour assurer que la paire intérieure de surfaces d'appui se met la première en butée lors du vissage, la distance entre la surface d'extrémité mâle et la surface d'appui extérieure mâle est, avant assemblage, légèrement plus longue d'un écart déterminé ΔL que la distance entre la surface d'extrémité femelle et la surface d'appui intérieure femelle.

Préférentiellement, l'écart ΔL est une fonction linéaire décroissante du diamètre extérieur des tubes de l'assemblage et une fonction linéaire croissante de leur épaisseur.

L'invention concerne également un procédé de réalisation par usinage de l'assemblage fileté intégral objet de l'invention dans lequel on usine dans la même passe d'usinage à la fois les surfaces d'extrémité et d'appui d'un élément considéré.

Un tel procédé permet d'obtenir une bonne précision sur la distance entre ces deux surfaces.

Avantageusement dans le cas de l'usinage de l'élément mâle, la même passe permet d'usiner, outre les surfaces d'extrémité et d'appui, la surface conique de lèvre et la surface conique enveloppe des sommets de filet du filetage mâle.

Les figures suivantes illustrent un mode particulier et préféré de réalisation de l'invention.

La figure 1 représente en coupe un élément mâle destiné à réaliser un assemblage fileté intégral de deux tubes métalliques selon la présente invention.

La figure 2 représente un détail de la figure 1.

La figure 3 représente un autre détail de la figure 1.

La figure 4 représente en coupe un élément femelle destiné à constituer avec l'élément mâle de la figure 1 un assemblage fileté intégral de deux tubes métalliques selon l'invention.

La figure 5 représente un détail de la figure 4.

La figure 6 représente en coupe l'assemblage réalisé des éléments des figures 1 et 4.

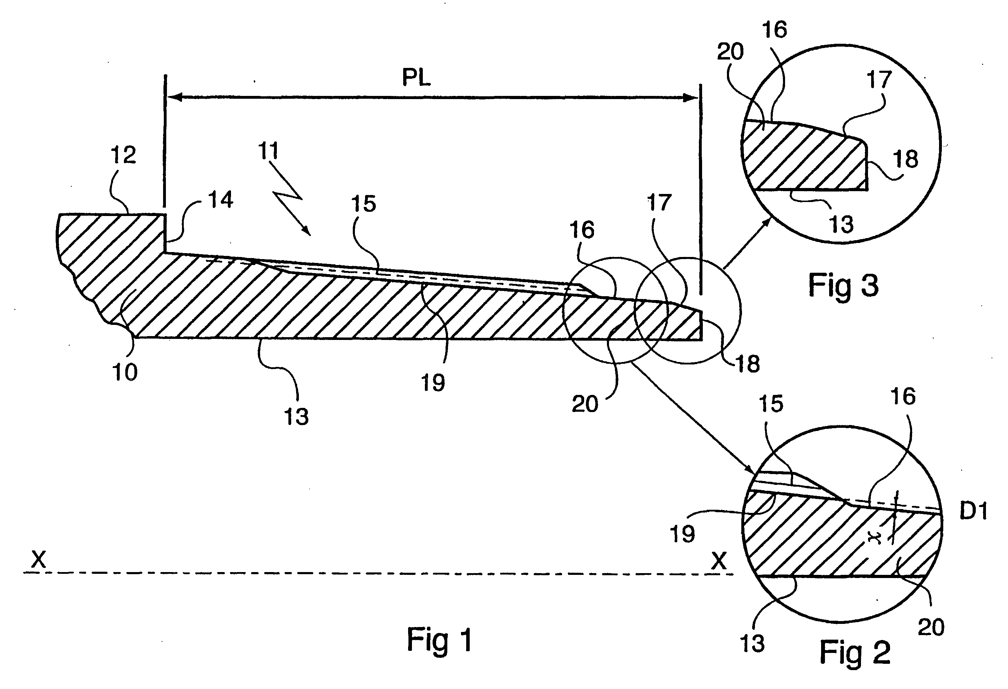

La figure 1 représente la zone d'extrémité d'un tube métallique 10 cylindrique de révolution sur laquelle on a réalisé extérieurement un élément mâle 11.

Cette zone d'extrémité peut être de même épaisseur que le corps du tube 10 ou, si besoin, avoir été rengraissée, par exemple par forgeage, le diamètre de la surface périphérique extérieure 12 de la zone d'extrémité pouvant alors être supérieur à celui du corps du tube et/ou le diamètre de la surface périphérique intérieure 13 de la zone d'extrémité être inférieur à celui du corps du tube.

Le tube 10 est destiné à être assemblé à un second tube 30 pour constituer un assemblage fileté intégral 100, l'élément mâle 11 du premier tube 10 étant assemblé à l'élément femelle 31 disposé en extrémité du second tube 30.

L'élément mâle 11 comprend extérieurement en allant vers l'extrémité du tube 10 :

a) Un décrochement de la surface périphérique extérieure 12 créant un épaulement extérieur avec une surface d'appui extérieure mâle 14, plane, annulaire et perpendiculaire à l'axe XX de l'assemblage,

b) Au-delà de cet épaulement, une surface conique de raccordement au filetage mâle qui sera décrite plus loin.

c) Au-delà de cette surface de raccordement, un filetage mâle conique extérieur 15.

La spécification API 5B (Specification for Inspection of Pipe Threads) éditée par l'American Petroleum Institute (API) donne des exemples de tels filetages coniques à filets triangulaires, ronds ou trapézoïdaux.

On utilisera de préférence des filets trapézoïdaux et plus particulièrement des filets en demi-queue d'aronde ou à angle de flanc porteur négatif tels que ceux de l'assemblage p. 28-29 du document VAM Catalog n° 940 déjà mentionné.

On peut en outre choisir une conicité de filetage plus élevée que la conicité standard de l'API 5B (6,25 %), par exemple une conicité de 15 % sur le diamètre. On verra par la suite l'intérêt d'une telle conicité sur les caractéristiques de l'assemblage.

La surface conique de raccordement entre la surface d'appui extérieure 14 et le filetage mâle 15 est sensiblement dans le prolongement du cône des sommets de filet et à l'intérieur de ce cône.

d) Au-delà du filetage, une lèvre 20 qui sépare le filetage mâle 15 de la portée d'étanchéité mâle 17.

Cette lèvre présente extérieurement une surface de lèvre conique 16 dont la conicité est égale à celle du filetage mâle 15 et dont la génératrice est sensiblement dans le prolongement D1 de la tangente 19 aux fonds de filet du filetage mâle 15 en restant à l'intérieur dudit prolongement D1.

Cela signifie que la génératrice de la surface de lèvre conique 16 est disposée légèrement du côté de l'axe XX de l'assemblage, la distance x entre cette génératrice et le prolongement D1 de la tangente 19 aux fonds de filet étant inférieure ou égale à 0,20 mm et de préférence voisine de 0,05 mm.

La disposition de la surface de lèvre conique 16 permet d'usiner dans la même passe d'usinage cette surface 16 et la surface conique enveloppe des sommets de filet du filetage mâle 15 et donc de réaliser l'élément mâle de manière économique.

Le petit décalage x entre la génératrice de la surface de lèvre conique 16 et le prolongement D1 de la tangente 19 aux fonds de filet du filetage mâle 15 permet en outre en fin d'usinage du filetage mâle 15 de dégager l'outil de coupe sans risque d'accrocher une surface quelconque.

e) Au-delà de la surface conique 16, une portée d'étanchéité mâle 17, conique, coaxiale à la surface de lèvre conique 16 mais de conicité supérieure à celle de cette dernière.

La conicité de la portée d'étanchéité mâle 17 par rapport au diamètre est, par exemple, de 50 % contre 15 % pour la surface conique 16.

La surface de la portée d'étanchéité mâle 17 est par là même intérieure à la surface prolongeant la surface conique de lèvre 16.

La portée d'étanchéité mâle 17 s'étend jusqu'à l'extrémité du tube 10, laquelle est constituée par une surface d'extrémité mâle 18 annulaire, plane et perpendiculaire à l'axe de l'assemblage.

En variante non représentée, la portée d'étanchéité mâle 17 peut se raccorder de manière connue à la surface d'extrémité mâle 18 par un chanfrein ou par une surface torique.

La surface d'extrémité mâle 18 rejoint la surface périphérique intérieure 13 du tube 10.

Le fait que les surfaces d'appui extérieure 14 et d'extrémité 18 soient planes et perpendiculaires à l'axe de l'assemblage permet un usinage économique de l'élément mâle 11.

La configuration géométrique de l'élément mâle 11 est particulièrement avantageuse en ce-que l'on peut réaliser dans une même passe d'usinage la surface d'extrémité mâle 18, la surface conique de lèvre 16, la surface conique enveloppe des sommets de filet du filetage mâle 15 et la surface d'appui extérieure mâle 14. Il s'ensuit à la fois une grande économie de réalisation de l'élément mâle 11 et une excellente précision sur la distance PL entre surface d'extrémité mâle 18 et surface d'appui extérieure mâle 14. On verra par la suite l'intérêt de tenir une bonne précision pour la cote PL.

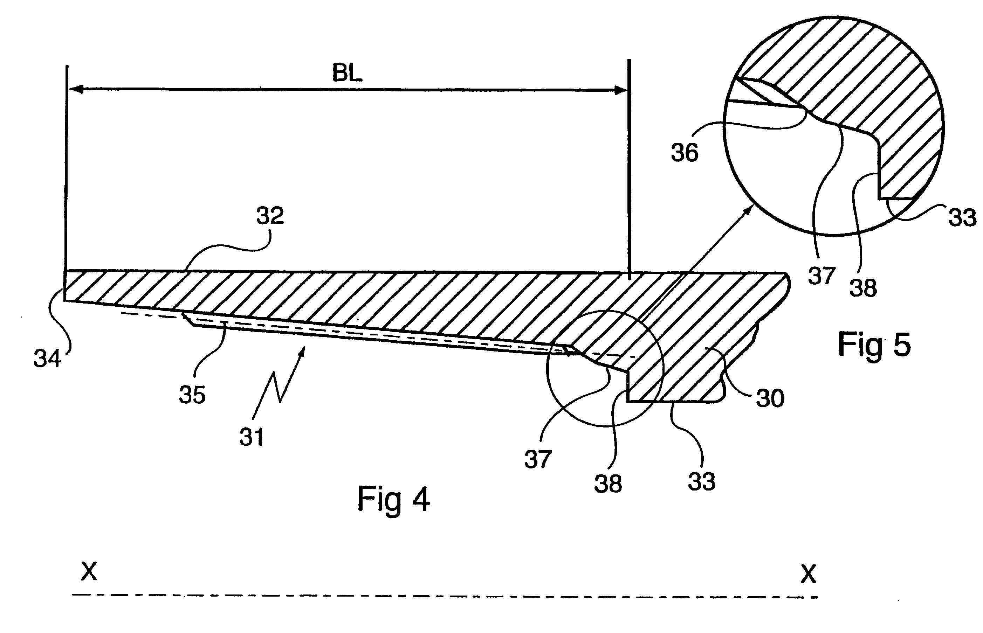

La figure 4 représente la zone d'extrémité du second tube métallique 30 sur laquelle on a réalisé intérieurement un élément femelle 31.

Cette zone d'extrémité peut être de même épaisseur que le corps du tube 30 ou, si besoin, avoir été rengraissée, par exemple par forgeage, le diamètre de la surface périphérique extérieure 32 de la zone d'extrémité pouvant alors être supérieur à celui du corps du tube et/ou le diamètre de la surface périphérique intérieure 33 de la zone d'extrémité être inférieur à celui du corps du tube.

L'élément femelle 31 comprend intérieurement en allant vers l'extrémité du tube 30 :

a) Un décrochement de la surface périphérique intérieure créant un épaulement intérieur avec une surface d'appui intérieure femelle 38 annulaire, plane et perpendiculaire à l'axe XX de l'assemblage.

b) Au-delà de cet épaulement, une portée d'étanchéité femelle 37 conique et conjuguée de la portée d'étanchéité mâle 17.

c) Une zone non filetée 36 de raccordement avec le filetage femelle 35.

d) Un filetage femelle 35 conique et conjugué du filetage mâle 15.

e) Une partie non filetée au-delà du filetage femelle 35, conique, sensiblement dans le prolongement du cône tangent aux fonds de filet du filetage femelle 35, par exemple légèrement à l'extérieur de ce cône.

Cette partie non filetée conique s'étend jusqu'à l'extrémité du tube 30, laquelle est constituée par une surface d'extrémité femelle 34, annulaire, plane et perpendiculaire à l'axe de l'assemblage.

La surface d'extrémité femelle 34 rejoint la surface périphérique extérieure 32 du tube 30.

Le fait que les surfaces d'appui intérieure 38 et d'extrémité 34 soient planes et perpendiculaires à l'axe de l'assemblage permet un usinage économique de l'élément femelle 31.

La remarque concernant l'économie et la précision d'usinage faite pour la disposition de l'élément mâle 11 s'applique à l'élément femelle 31, la cote BL entre surface d'extrémité femelle 34 et surface d'appui intérieur femelle 38 étant tenue avec précision grâce à l'usinage dans une même passe des surfaces 34 et 38.

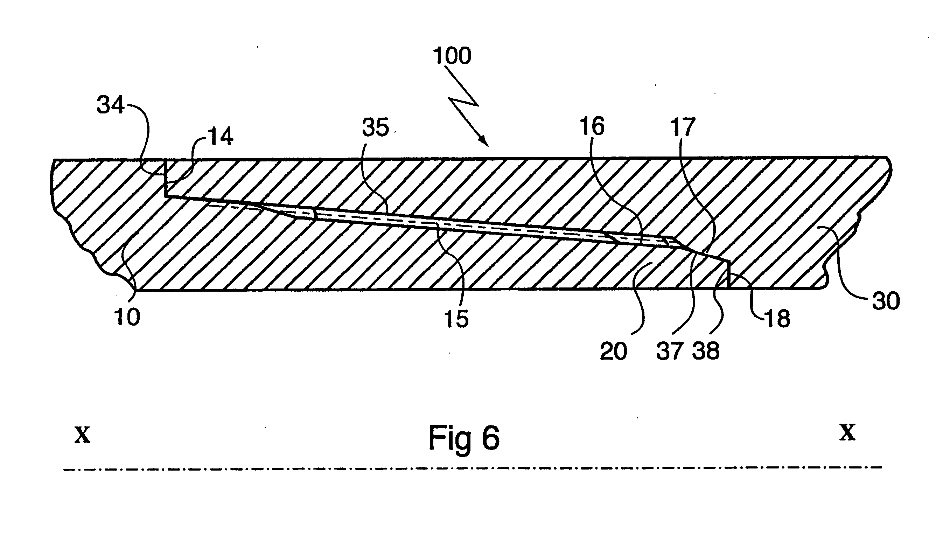

La figure 6 montre l'assemblage 100 entre les tubes métalliques 10 et 30.

Avantageusement, la surface périphérique extérieure 12 du tube 10 a un diamètre égal au diamètre de celle 32 du tube 30 et la surface périphérique interne 13 du tube 10 a un diamètre égal au diamètre de celle 33 du tube 30 de sorte que les surfaces périphériques des tubes ne présentent pas de décrochement à leur jonction.

Le filetage mâle 15 est vissé dans le filetage femelle 35.

Avantageusement en fin d'assemblage, les sommets de filet femelle interfèrent radialement avec les fonds de filet mâles, l'interférence diamétrale étant par exemple de l'ordre de 0,1 mm.

La portée d'étanchéité mâle 17 interfère radialement avec la portée d'étanchéité femelle 37 avec des valeurs d'interférence diamétrale de quelques dixièmes de mm entre ces portées d'étanchéité.

**EP 1 121 553 B1**

La lèvre 20 constitue à l'extrémité du tube 10 une sorte de poutre flexible encastrée au niveau du filetage 15.

L'interférence diamétrale imposée au niveau de la portée d'étanchéité mâle 17 induit une flèche de l'extrémité de la lèvre 20 et, compte tenu de la géométrie de la poutre, une pression de contact élevée sur les portées d'étanchéité mâle/femelle 17, 37 et des contraintes de flexion dans la portée.

La disposition conique de la surface de lèvre présente à cet égard de multiples avantages :

Tout d'abord, le fait que la surface conique de lèvre 16 soit située quasiment dans le prolongement D1 de la tangente 19 aux fonds de filet du filetage mâle 15 mais légèrement décalée de x vers l'axe de l'assemblage et que la surface de la portée d'étanchéité mâle 17 soit intérieure à la surface prolongeant la surface conique de lèvre 16 présente l'avantage majeur que, lors de la présentation des tubes 10, 30 et de leur vissage jusqu'à leur assemblage, les portées d'étanchéité mâle et femelle 17, 37 sont protégées des coups qui risquent sinon de les détériorer.

En outre la conicité de 15 % du filetage mâle 15 et de la surface de lèvre 16, plus élevée que la conicité standard des filetages selon spécification API 5B (= 6,25 %) donne à la lèvre 20 une forme lui permettant de se rapprocher de celle d'une poutre isorésistante en flexion, où la matière est idéalement répartie pour présenter dans chaque section la même résistance à la flexion.

La forme de la lèvre 20 diffère de celle d'une poutre idéalement isorésistante en flexion qui se termine en pointe à son extrémité libre, une telle forme ne permettant pas de loger une portée conique d'étanchéité au-delà de la lèvre 20 et d'assurer une résistance suffisante à la compression axiale de la surface d'extrémité mâle 18 qui est en butée contre la surface d'appui intérieure femelle 38.

Des formes de surface de lèvre autres que conique permettent aussi de protéger la portée d'étanchéité mâle des coups : il suffit en effet que le plus grand cercle de la portée d'étanchéité mâle 17 soit intérieur ou tangent à la surface conique engendrée par la rotation de la droite D1. La surface de lèvre pourrait par exemple être cylindrique de diamètre égal à celui du grand cercle de la portée d'étanchéité mâle 17 mais alors l'épaisseur de métal de la lèvre au niveau de l'extrémité du filetage 15 conduirait à une lèvre plus flexible et donc à une moindre pression de contact que la surface conique de lèvre 16 de la présente invention. On a pu en outre montrer qu'une lèvre 20 avec une surface conique de lèvre 16 selon la présente invention augmente la longueur effective de contact des portées d'étanchéité mâle et femelle 17, 37 et l'effort de contact. Des valeurs numériques étayant ces points seront présentées plus loin dans les exemples.

Enfin, le quasi-alignement de la génératrice de la surface conique de lèvre 16 avec la droite D1 limite les concentrations de contraintes créées par des discontinuités géométriques, concentrations de contraintes qui obligeraient, sinon, à limiter la valeur de la pression de contact de manière à ce qu'un niveau de contrainte critique ne soit pas atteint à la liaison entre la lèvre 20 et l'extrémité du filetage mâle 15.

Le petit décalage x, limité à 0,20 mm et préférentiellement égal à 0,05 mm, entre la génératrice de la surface conique de lèvre 16 et la droite D1 n'augmente pas sensiblement le facteur de concentration de contraintes tout en procurant les avantages décrits ci-dessus.

Sur l'élément femelle 31 la zone de raccordement 36 entre portée d'étanchéité 37 et filetage femelle 35 a une géométrie telle qu'elle ne touche pas la surface conique de lèvre 16 de l'élément mâle 11 lors de l'assemblage tout en permettant un dégagement aisé de l'outil lors de l'usinage du filetage femelle 35.

La surface d'extrémité mâle 18 forme avec la surface d'appui intérieure femelle 38 une paire intérieure de surfaces d'appui et la surface d'extrémité femelle 34 forme avec la surface d'appui extérieure mâle 14 une paire extérieure de surfaces d'appui.

On a conçu les distances, d'une part PL entre la surface d'extrémité mâle 18 et la surface d'appui extérieure mâle 14, d'autre part BL entre la surface d'extrémité femelle 34 et la surface d'appui intérieure femelle 38, pour qu'en fin d'assemblage, la mise en butée s'opère systématiquement en premier lieu entre la paire intérieure 18, 38 de surfaces d'appui et non entre la paire extérieure 14, 34 de surfaces d'appui.

La surface d'extrémité femelle 34 de la paire extérieure de surfaces d'appui est, une fois l'assemblage réalisé, selon le cas en butée contre la surface d'appui extérieure mâle 14 ou en quasi contact avec cell-ci.

Le fait de privilégier la mise en butée des surfaces 18, 38 de la paire intérieure de surfaces d'appui qui est la paire la plus proche des portées d'étanchéité 17, 37 permet, selon les inventeurs, de définir plus précisément la position relative des portées d'étanchéité 17, 37 en fin d'assemblage et par conséquent leur interférence diamétrale.

Une telle précision est d'autant plus nécessaire qu'on utilise des portées d'étanchéité 17, 37 relativement inclinées (conicité de 50 % sur le diamètre).

De portées d'étanchéité inclinées de la sorte sont moins sensibles au grippage et peuvent donc supporter de fortes pressions de contact mais une faible rotation au vissage entraîne une forte variation d'interférence diamétrale.

Les deux paires de surfaces d'appui peuvent se trouver en butée en fin de vissage parce que l'on a cherché à faire passer dans l'assemblage un couple de vissage très important ou en cas de surcouple accidentel lors du vissage ou encore du fait du fait des tolérances de réalisation des éléments 11, 31, la paire intérieure absorbant alors la majeure partie du couple de vissage et la paire extérieure le reste.

Que les deux paires de surfaces d'appui se trouvent en butée après vissage ou seulement la paire intérieure

7

(18, 38) de surfaces d'appui, la paire extérieure (14, 34) de surfaces d'appui en butée ou en quasi contact est là pour venir immédiatement en renfort de manière à absorber les sollicitations dues au vissage ou celles supplémentaires en service sans risquer de plastifier le métal des éléments.

Lorsque l'assemblage est, par exemple, soumis en service à des sollicitations de compression axiale ou de flexion plane, il s'ensuit un surcroît d'effort sur les paires de surfaces d'appui en butée mais aussi sur la lèvre et sur les portées d'étanchéité qui ne doivent pas être déformées plastiquement, ce qui aurait pour conséquence un risque de perte d'étanchéité et de grippage après dévissage-revissage.

Pour permettre une telle synchronisation de fonctionnement des deux paires de surfaces d'appui, la distance PL entre la surface d'extrémité mâle 18 et la surface d'appui extérieure mâle 14 est avant assemblage légèrement plus longue que la distance BL entre la surface d'extrémité femelle 34 et la surface d'appui intérieure femelle 38 d'une valeur déterminée ΔL.

La différence ΔL = PL-BL dépend de nombreux paramètres physiques (module de Young, coefficient de Poisson, limite d'élasticité du matériau) et géométriques (interférence diamétrale sur les filetages, interférence diamétrale sur les portées d'étanchéité, épaisseur de lèvre, diamètre de portée d'étanchéité mâle, sections critiques mâle et femelle, etc...).

Compte tenu des relations entre ces différentes caractéristiques géométriques, les inventeurs ont pu montrer que, pour un même matériau, la valeur ΔL croît linéairement avec l'épaisseur des tubes et décroît avec leur diamètre extérieur:

$$\Delta L = a*T - b*OD + c$$

T étant l'épaisseur des tubes, OD étant le diamètre extérieur des tubes, a, b et c étant des constantes positives.

Avantageusement, les éléments mâle 11 et femelle 31 peuvent être usinés dans les extrémités recoupées de tubes comportant des éléments mâle ou femelle détériorés de l'art antérieur, par exemple des éléments à filetages cylindriques bi-étagés.

On donnera maintenant plusieurs exemples pour étayer les allégations de performances accrues pour les assemblages selon l'invention par rapport aux assemblages de l'état de la technique.

1er exemple : Comparaison d'un assemblage de tubes selon l'invention de diamètre extérieur 101,6 mm (4") et d'épaisseur 4,83 mm (assemblage A1) avec un assemblage B de tubes de mêmes dimensions selon l'état de la technique du point de vue inertie (ou rigidité en flexion).

|  | Assemblage A1 | Assemblage B |
|---|---|---|
| Conicité filetages | 15% | 6,25% (=1/16) |
| Conicité portée | 50% | 10% |
| Surface de lèvre élément mâle | conique à 15% | cylindrique |
| Surface d'extrémité mâle | droite | conique convexe (15°) |

Un calcul analytique de l'inertie des lèvres indique une inertie 11% plus élevée en flexion de la lèvre pour l'assemblage A1 que pour l'assemblage B. Il s'ensuit une rigidité plus élevée en flexion de l'assemblage A1 qui permet ainsi de solliciter davantage les portées d'étanchéité et d'augmenter les performances de l'assemblage.

2ème exemple : Comparaison du point de vue des performances des portées d'étanchéité d'un assemblage de tubes de diamètre extérieur 60.3 mm (2"3/8) et d'épaisseur 4.83 mm (4.7 lb/ft) selon l'invention (assemblage A2) avec un assemblage C de tubes de mêmes dimensions simplement différent par la forme de la lèvre.

|  | A2 | C |
|---|---|---|
| Conicité filetages | 15% | 15% |
| Conicité portées | 50% | 50% |
| Surface d'extrémité mâle | droite | droite |
| Surface de lèvre mâle | conique | cylindrique |
| Epaisseur de lèvre mâle | 3,2 mm du côté portée 4 mm du côté filetage | 3,2 mm constante |
| Largeur effective de contact portées mâle/femelle | 1,24 mm | 1,08 mm |
| Effort de contact portée | 600 N/mm | 571 N/mm |

La largeur effective de contact et l'effort de contact ont été déterminés par calcul numérique à l'aide de la méthode des éléments finis.

La rigidité accrue de la lèvre avec surface de lèvre conique sur l'assemblage A2 selon l'invention permet d'assurer un meilleur contact des portées d'étanchéité (+ 15% sur la largeur effective de contact) et un effort de contact portées accru (+ 5%) par rapport à l'assemblage C. Un tel accroissement de l'effort de contact constitue une amélioration sensible des performances de l'assemblage.

3ème exemple : écart de distance ΔL sur des assemblages en acier selon l'invention.

Le respect d'un tel écart de distance ΔL permet de mettre la paire intérieure de surfaces d'appui en butée en premier lieu lors de l'assemblage et ainsi de sécuriser le fonctionnement des portées d'étanchéité.

| Diamètre OD tubes (mm) (") | Epaisseur T tubes (mm) | Poids/mètre (lb/ft) | ΔL (mm) |
|---|---|---|---|
| 60,3 (2"3/8) | 4,83 | 4,7 | 0,092 |
| 88,9 (3" 1/2) | 8,56 | 14,3 | 0,074 |
| 114,3 (4" 1/2) | 14,22 | 24,6 | 0,064 |

L'écart de distance (ΔL) peut être ici donné par la formule:

$$\Delta L = 0,14 + (3*T - 1,14*OD)/1200$$

**Revendications**

1. Assemblage fileté intégral (100) de deux tubes métalliques comprenant un élément mâle (11) en extrémité d'un premier tube (10) et un élément femelle (31) en extrémité d'un second tube (30), l'élément mâle (11) comprenant en allant vers l'extrémité du premier tube (10) un épaulement avec une surface d'appui extérieure mâle (14) annulaire et transversale, un filetage mâle (15) conique, une portée d'étanchéité mâle (17) et une surface d'extrémité mâle (18) annulaire laquelle est aussi la surface d'extrémité du premier tube (10), l'élément femelle (31) comprenant en allant vers l'extrémité du second tube (30) un épaulement avec une surface d'appui intérieure femelle (38) annulaire et transversale, une portée d'étanchéité femelle (37), un filetage femelle (35) conique et une surface d'extrémité femelle (34) annulaire qui est aussi la surface d'extrémité du second tube (30), le filetage mâle (15) étant vissé dans le filetage femelle (35), la portée d'étanchéité mâle (17) interférant radialement avec la portée d'étanchéité femelle (37), la surface d'extrémité mâle (18) formant avec la surface d'appui intérieure femelle (38) une paire intérieure de surfaces d'appui et la surface d'extrémité femelle (34) formant avec la surface d'appui extérieure mâle (14) une paire extérieure de surfaces d'appui, les surfaces d'extrémités (18,34) et d'appui (14, 38) de chacun des éléments mâle et femelle ayant des surfaces planes perpendiculaires à l'axe (XX) de l'assemblage, **caractérisé en ce que** la portée d'étanchéité mâle (17) est séparée du filetage mâle (15) par une lèvre (20) présentant extérieurement une surface de lèvre (16) conique dont la conicité est égale à celle du filetage mâle (15) et dont la génératrice est sensiblement dans le prolongement (D1) de la tangente (19) aux fonds de filet du filetage mâle (15) tout en restant du côté de l'axe (XX) de l'assemblage par rapport au dit prolongement (D1), **en ce que** la surface de la portée d'étanchéité mâle (17) est intérieure ou tangente à la surface prolongeant la surface conique de lèvre (16) et **en ce que** la distance(PL)entre la surface d'extrémité mâle (18) et la surface d'appui extérieure mâle (14) est adaptée à la distance(BL)entre la surface d'extrémité femelle (34) et la surface d'appui intérieure femelle (38) de manière à ce qu'au cours du vissage, la mise en butée se fasse d'abord entre la paire intérieure (18, 38) de surfaces d'appui.

2. Assemblage fileté intégral selon la revendication 1 **caractérisé en ce que** la distance (x) entre la génératrice de la surface conique de lèvre (16) et le prolongement (D1) de la tangente (19) aux fonds de filet du filetage mâle (15) est inférieure ou égale à 0,20 mm.

3. Assemblage fileté intégral selon la revendication 1 ou 2 **caractérisé en ce que** la conicité des filetages mâle et femelle (15, 35) est comprise entre 6,25 et 20%.

4. Assemblage fileté intégral selon l'une quelconque des revendications 1 à 3 **caractérisé en ce que** la portée d'étanchéité mâle (17) est une surface conique de conicité supérieure à celle de la surface conique de lèvre (16), la portée d'étanchéité femelle (37) étant également conique et de conicité correspondante à celle de la portée d'étanchéité mâle (17).

**5.** Assemblage fileté intégral selon la revendication 4 **caractérisé en ce que** la conicité de la portée d'étanchéité mâle (17) est comprise entre 25% et 75%.

**6.** Assemblage fileté intégral selon l'une quelconque des revendications 1 à 5 **caractérisé en ce que** les surfaces (14, 34) de la paire extérieure de surfaces d'appui sont en butée.

**7.** Assemblage fileté intégral selon l'une quelconque des revendications 1 à 5 **caractérisé en ce que** les surfaces (14, 34) de la paire extérieure de surfaces d'appui sont en quasi contact.

**8.** Assemblage fileté intégral selon l'une quelconque des revendications 1 à 7 **caractérisé en ce que** sur les éléments mâle et femelle (11, 31) non assemblés, la distance (PL) entre la surface d'extrémité mâle (18) et la surface d'appui extérieure mâle (14) est plus longue que la distance (BL) entre la surface d'extrémité femelle(34) et la surface d'appui intérieure femelle (38) d'un écart de distance ($\Delta$L) déterminé.

**9.** Assemblage fileté intégral selon la revendication 8 **caractérisé en ce que** ledit écart de distance ($\Delta$L) est une fonction linéaire décroissante du diamètre extérieur (OD) des tubes (10, 30) de l'assemblage et une fonction linéaire croissante de leur épaisseur (T).

**10.** Assemblage fileté intégral selon la revendication 9 **caractérisé en ce que** ledit écart de distance ($\Delta$L) est donné par la formule: $\Delta$L= 0,14+(3*T-1,14*OD)/1200, T représentant l'épaisseur des tubes (10,30) et OD leur diamètre extérieur.

**11.** Procédé de réalisation par usinage de l'assemblage fileté intégral de l'une des revendications 1 à 10 **caractérisé en ce que**, sur chacun des éléments mâle et femelle (11, 31), la surface d'appui (14, 38) est obtenue dans la même passe d'usinage que la surface d'extrémité (18, 34) du même élément.

**12.** Procédé de réalisation par usinage d'un assemblage fileté intégral selon la revendication 10 **caractérisé en ce que** l'on usine sur l'élément mâle (11) dans la même passe d'usinage les surfaces d'extrémité mâle (18) et d'appui extérieure mâle (14), la surface conique de lèvre (16) et la surface conique enveloppe des sommets de filet du filetage conique mâle (15).

**Patentansprüche**

**1.** Integrale Gewindeverbindung (100) von zwei Metallrohren, mit einem Einsteckelement (11) am Ende eines ersten Rohrs (10) und einem Aufnahmeelement (31) am Ende eines zweiten Rohrs (30), wobei das Einsteckelement (11) in Richtung zum Ende des ersten Rohrs (10) eine Schulter mit einer äußeren ringförmigen und quer verlaufenden Einsteck-Auflagefläche (14), ein konisches Außengewinde (15), eine Einsteck-Dichtungsoberfläche (17) und eine ringförmige Einsteck-Endfläche aufweist, die auch die Endfläche des ersten Rohrs (10) ist, während das Aufnahmeelement (31) in Richtung auf das Ende des zweiten Rohrs (30) eine Schulter mit einer inneren ringförmigen und quer verlaufenden Aufnahme-Auflagefläche (38), eine Aufnahme-Dichtungsoberfläche (37), ein konisches Innengewinde (35) und eine ringförmige Aufnahme-Endfläche (34) aufweist, die auch die Endfläche des zweiten Rohrs (30) ist, wobei das Außengewinde (15) in das Innengewinde (35) geschraubt wird, die Einsteck-Dichtungsoberfläche (17) radial mit der Aufnahme-Dichtungsoberfläche (37) interferiert, die Einsteck-Endfläche (18) mit der inneren Aufnahme -Auflagefläche (38) ein inneres Paar von Auflageflächen bildet, und die Aufnahme-Endfläche (34) mit der äußeren Einsteck-Auflageflache (14) ein äußeres Paar von Auflageflächen bildet, wobei die End- (18, 34) und Auflageflächen (14, 38) des Einsteck- und des Aufnahmeelements ebene Flächen senkrecht zur Achse (XX) der Verbindung aufweisen, **dadurch gekennzeichnet, daß** die Einsteck-Dichtungsoberfläche (17) vom Außengewinde (15) durch eine Lippe (20) getrennt ist, die außen eine konische Lippenfläche (16) aufweist, deren Konizität gleich derjenigen des Außengewindes (15) ist und deren Mantellinie sich im wesentlichen in der Verlängerung (D1) der Tangente (19) der Gewindegründe des Außengewindes (15) befindet und gleichzeitig in bezug auf die Verlängerung (D1) auf der Seite der Achse (XX) der Verbindung bleibt, daß die Fläche der Einsteck-Dichtungsoberfläche (17) innerhalb der Fläche, die die konische Lippenfläche (16) verlängert, verläuft oder sie tangiert, und daß der Abstand (PL) zwischen der Einsteck-Endfläche (18) und der äußeren Einsteck-Auflagefläche (14) an den Abstand (BL) zwischen der Aufnahme-Endfläche (34) und der inneren Aufnahme-Auflagefläche (38) angepaßt ist, so daß während des Schraubvorgangs zunächst die Flächen des inneren Paars(18, 38) von Auflageflächen gegeneinander in Anschlag gelangen.

2. Integrale Gewindeverbindung nach Anspruch 1, **dadurch gekennzeichnet, daß** der Abstand (x) zwischen der Mantellinie der konischen Lippenfläche (16) und der Verlängerung (D1) der Tangente (19) der Gewindegründe des Außengewindes (15) geringer als oder gleich 0,20 mm ist.

3. Integrale Gewindeverbindung nach Anspruch 1 oder 2, **dadurch gekennzeichnet, daß** die Konizität des Außen- und des Innengewindes (15, 35) zwischen 6,25 und 20% liegt.

4. Integrale Gewindeverbindung nach einem der Ansprüche 1 bis 3, **dadurch gekennzeichnet, daß** die Einsteck-Dichtungsoberfläche (17) eine konische Fläche ist, deren Konizität stärker ist als diejenige der konischen Lippenfläche (16), wobei die Aufnahme-Dichtungsoberfläche (37) ebenfalls konisch und von einer Konizität ist, die derjenigen der Einsteck-Dichtungsoberfläche (17) entspricht.

5. Integrale Gewindeverbindung nach Anspruch 4, **dadurch gekennzeichnet, daß** die Konizität der Einsteck-Dichtungsoberfläche (17) zwischen 25% und 75% liegt.

6. Integrale Gewindeverbindung nach einem der Ansprüche 1 bis 5, **dadurch gekennzeichnet, daß** die Flächen (14, 34) des äußeren Paars von Auflageflächen in Anschlag liegen.

7. Integrale Gewindeverbindung nach einem der Ansprüche 1 bis 5, **dadurch gekennzeichnet, daß** die Flächen (14, 34) des äußeren Paars von Auflageflächen quasi in Kontakt stehen.

8. Integrale Gewindeverbindung nach einem der Ansprüche 1 bis 7, **dadurch gekennzeichnet, daß** bei den nicht verbundenen Einsteckund Aufnahmeelementen (11, 31) der Abstand (PL) zwischen der Einsteck-Endfläche (18) und der äußeren Einsteck-Auflagefläche (14) um eine bestimmte Abstandsspanne (ΔL) länger ist als der Abstand (BL) zwischen der Aufnahme-Endfläche (34) und der inneren Aufnahme-Auflagefläche (38).

9. Integrale Gewindeverbindung nach Anspruch 8, **dadurch gekennzeichnet, daß** die Abstandsspanne (ΔL) eine abnehmende lineare Funktion des Außendurchmessers (OD) der Rohre (10, 30) der Verbindung und eine ansteigende lineare Funktion ihrer Stärke (T) ist.

10. Integrale Gewindeverbindung nach Anspruch 9, **dadurch gekennzeichnet, daß** die Abstandsspanne (ΔL) durch die Formel:

$$\Delta L = 0,14 + (3*T - 1,14*OD)/1200$$

gegeben ist, wobei T die Stärke der Rohre (10, 30) und OD ihren Außendurchmesser darstellt.

11. Verfahren zur Herstellung durch spanende Bearbeitung der integralen Gewindeverbindung nach einem der Ansprüche 1 bis 10, **dadurch gekennzeichnet, daß** auf jedem Einsteck- und Aufnahmeelement (11, 31) die Auflagefläche (14, 38) im gleichen spanenden Bearbeitungsgang erhalten wird wie die Endfläche (18, 34) des gleichen Elements.

12. Verfahren zur Herstellung durch spanende Bearbeitung einer integralen Gewindeverbindung nach Anspruch 10, **dadurch gekennzeichnet, daß** auf dem Einsteckelement (11) im gleichen Bearbeitungsvorgang die Einsteck-Endfläche (18) und die äußere Auflagefläche (14), die konische Lippenfläche (16) und die konische Hüllfläche der Gewindescheitel des konischen Außengewindes (15) spanend bearbeitet werden.

**Claims**

1. Integral threaded connection (100) of two metal tubes comprising a male element (11) at the end of a first tube (10) and a female element (31) at the end of a second tube (30), the male element (11) comprising, moving toward the end of the first tube (10), a shoulder with an annular, transverse male outer bearing surface (14), a tapered male threading (15), a male sealing surface (17) and an annular male end surface (18) that is also the end surface of the first tube (10), the female element (31) comprising, moving toward the end of the second tube (30), a shoulder with an annular, transverse female inner bearing surface (38), a female sealing surface (37), a female tapered threading (35) and an annular female end surface (34) that is also the end surface of the second tube (30), the male threading (15) being screwed into the female threading (35), the male sealing surface (17) interfering radially with the female sealing surface (37), the male end surface (18) forming an inner pair of bearing surfaces with the female inner bearing surface (38) and the female end surface (34) forming an outer pair of bearing surfaces with the male outer bearing surface (14), the end surfaces (18, 34) and bearing surfaces (14, 38) of each of the male and female elements having flat surfaces perpendicular to the axis (XX) of the connection, **characterized in that** the male sealing surface (17) is separated from the male threading (15) by a lip (20) having an external tapered lip surface (16) whose amount of taper is equal to that of the male threading (15) and whose generatrix is roughly in the extension (D1) of the tangent (19) to the thread roots of the male threading (15) while remaining on the side of the axis (XX) of the connection with respect to said extension (D1), **in that** the surface of the male sealing surface (17) is inside or tangent to the surface extending the tapered lip surface (16) and **in that** the distance (PL) between the male end surface (18) and the male outer bearing surface (14) is adapted to the distance (BL) between the female end surface (34) and the female inner bearing surface (38) so that during screwing the abutment occurs between the inner pair (18, 38) of bearing surfaces first.

2. Integral threaded connection in accordance-with claim 1 **characterized in that** the distance (x) between the generatrix of the tapered lip surface (16) and the extension (D1) of the tangent (19) to the thread roots of the male threading (15) is less than or equal to 0.20 mm.

3. Integral threaded connection in accordance with claim 1 or 2 **characterized in that** the amount of taper of the male and female threading (15, 35) is between 6.25 and 20%.

4. Integral threaded connection in accordance with any of claims 1 to 3 **characterized in that** the male sealing surface (17) is a tapered surface whose amount of taper is greater than that of the tapered lip surface (16), the female sealing surface (37) also being tapered and with an amount of taper corresponding to that of the male sealing surface (17).

5. Integral threaded connection in accordance with claim 4 **characterized in that** the amount of taper of the male sealing surface (17) is between 25% and 75%.

6. Integral threaded connection in accordance with any of claims 1 to 5 **characterized in that** the surfaces (14, 34) of the outer pair of bearing surfaces are abutted.

7. Integral threaded connection in accordance with any of claims 1 to 5 **characterized in that** the surfaces (14,34) of the outer pair of bearing surfaces are almost in contact with each other.

8. Integral threaded connection in accordance with any of claims 1 to 7 **characterized in that** on the unassembled male and female elements (11, 31), the distance (PL) between the male end surface (18) and the male outer bearing surface (14) is longer than the distance (BL) between the female end surface (34) and the female inner bearing surface (38) by a determined distance deviation (ΔL).

9. Integral threaded connection in accordance with claim 8 **characterized in that** said distance deviation (ΔL) is a decreasing linear function of the outer diameter (OD) of the tubes (10, 30) of the connection and an increasing linear function of their thickness (T).

10. Integral threaded connection in accordance with claim 9 **characterized in that** said distance deviation (ΔL) is given by the formula: $\Delta L = 0.14+(3*T-1.14*OD)/1200$, (T) representing the thickness of the tubes (10, 30) and (OD) their outer diameter.

11. Machining production process for the integral threaded connection of one of claims 1 to 10 **characterized in that** on each of the male and female elements (11, 31), the bearing surface (14, 38) is obtained in the same machining stage as the end surface (18, 34) of the same element.

12. Machining production process for an integral threaded connection in accordance with claim 10 **characterized in that** one machines the male end (18) and male outer bearing (14) surfaces, the tapered lip surface (16) and the tapered surface encasing the crests of the male tapered threading (15) on the male element (11) during the same machining stage.

PL

12

11

14

15

16

17

16

20

17

18

13

Fig 3

10

19

18

13

20

15

16

19

X

D1

X

19

Fig 1

13

20

Fig 2

EP 1 121 553 B1

BL

32

34

35

31

37

38

33

30

36

37

38

33

Fig 5

Fig 4

X — — — — — — — — — — — — — — — — — — — X

EP 1 121 553 B1

Fig 6

X           X

EP 1 121 553 B1